# EUROPÄISCHE PATENTSCHRIFT

(11) **EP 3 008 111 B1**
(45) Veröffentlichungstag und Bekanntmachung des Hinweises auf die Patenterteilung: **28.02.2018**
(21) Anmeldenummer: 14729019.1
(22) Anmeldetag: 11.06.2014
(51) Int. Cl.: C08G 69/30, C08G 69/46, C08L 77/04

(54) **VERFAHREN ZUR HERSTELLUNG ALIPHATISCHER ODER TEILAROMATISCHER POLYAMIDE UMFASSEND EINE FESTPHASENPOLYMERISATION**
METHOD FOR THE PREPARATION OF ALIPHATIC OR PARTIALLY AROMATIC POLYAMIDES COMPRISING A SOLID STATE POLYMERISATION
PROCÉDÉ DE FABRICATION DE POLYAMIDES ALIPHATIQUES OU PARTIELLEMENT AROMATIQUES COMPRENANT UNE POLYMÉRISATION DE PHASE SOLIDE

(30) Priorität: 12.06.2013 EP 13171646
(43) Veröffentlichungstag der Anmeldung: 20.04.2016
(73) Patentinhaber: BASF SE, 67056 Ludwigshafen am Rhein (DE)
(72) Erfinder: SCHMIDT, Christian, 67061 Ludwigshafen (DE); RICHTER, Florian, 68159 Mannheim (DE); CLAUSS, Joachim, 64297 Darmstadt (DE); WILMS, Axel, 67227 Frankenthal (DE); KORY, Gad, 69251 Gaiberg (DE); SCHNELLER, Arnold, 64342 Seeheim-Jugenheim (DE); STAMMER, Achim, 67251 Freinsheim (DE); RAUSCHENBERGER, Volker, 67304 Eisenberg (DE); SCHWIEGK, Stefan, 67433 Neustadt (DE)
(86) Internationale Anmeldenummer: PCT/EP2014/062124
(87) Internationale Veröffentlichungsnummer: WO 2014/198770

(56) Entgegenhaltungen:
- EP-A1- 0 693 515
- WO-A2-2004/055084
- DE-C1- 4 142 978

## Beschreibung

### HINTERGRUND DER ERFINDUNG

Die vorliegende Erfindung betrifft ein Verfahren zur Herstellung eines aliphatischen oder teilaromatischen Polyamids, bei dem man ein Polyamidpräpolymer einer Festphasenpolymerisation unterzieht.

### STAND DER TECHNIK

Polyamide gehören zu den weltweit in großem Umfang hergestellten Polymeren und dienen neben den Hauptanwendungsbereichen Folien, Fasern und Werkstoffen einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Die Herstellung von Polyamid 66 erfolgt überwiegend durch Polykondensation sogenannter AH-Salzlösungen, d. h. von wässrigen Lösungen, die Adipinsäure und 1,6-Diaminohexan (Hexamethylendiamin) in stöchiometrischen Mengen enthalten. Das klassische Verfahren zur Herstellung von Polyamid 6 ist die hydrolytische ringöffnende Polymerisation von ε-Caprolactam, die immer noch von sehr großer technischer Bedeutung ist. Konventionelle Herstellverfahren für Polyamid 6 und Polyamid 66 sind z. B. in Kunststoffhandbuch, ¾ Technische Thermoplaste: Polyamide, Carl Hanser Verlag, 1998, München, S. 42-71, beschrieben.

Eine weitere wichtige Gruppe der Polyamide sind teilkristalline oder amorphe, thermoplastische, teilaromatische Polyamide, die als wichtige technische Kunststoffe breite Verwendung gefunden haben. Sie zeichnen sich insbesondere durch ihre hohe Temperaturbeständigkeit aus und werde auch als Hochtemperatur-Polyamide (HTPA) bezeichnet. Ein wichtiger Einsatzbereich der HTPA ist die Herstellung von Elektro- und Elektronikbauteilen, wobei insbesondere Polymere auf Basis von Polyphthalamid (PPA) sich für den Einsatz in Lötprozessen unter bleifreien Bedingungen (lead free soldering) eignen. HTPA dienen dabei unter Anderem zur Herstellung von Steckverbindern, Mikroschaltern und -tastern und Halbleiterbauteilen, wie Reflektorgehäusen von Leuchtdioden (LED). Ein weiterer wichtiger Einsatzbereich der HTPA sind Automobil-Anwendungen im Hochtemperaturbereich. Hier kommt es vor allem auf eine gute Wärmealterungsbeständigkeit, hohe Festigkeit und Zähigkeit und Schweißnahtfestigkeit der eingesetzten Polymere an. Amorphe HTPA oder solche mit sehr geringen kristallinen Anteilen sind transparent und eignen sich speziell für Anwendungen, bei denen Durchsichtigkeit vorteilhaft ist. Teilkristalline HTPA zeichnen sich im Allgemeinen durch eine dauerhafte Beständigkeit bei hoher Umgebungstemperatur aus und eignen sich z. B. für Anwendungen im Motorraumbereich.

Die Herstellung von teilaromatischen Polyamiden beginnt in der Regel mit der Bildung einer wässrigen Salzlösung aus wenigstens einem Diamin und wenigstens einer Dicarbonsäure sowie optional weiteren Monomerkomponenten, wie Lactamen, ω-Aminosäuren, Monoaminen, Monocarbonsäuren und Mischungen davon, mit der Maßgabe, dass wenigstens eine der Komponenten eine aromatische Gruppe aufweist. An die Bildung der Salzlösung schließt sich dann eine Oligomerisierung in der flüssigen Phase an, während der in der Regel noch keine Abtrennung von Wasser erfolgt. Am Ende dieser Oligomerisierung weisen die Oligomere im Mittel beispielsweise 4 bis 10 Wiederholungseinheiten auf. Zum weiteren Molekulargewichtsaufbau stehen dann zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Am Ende der Polymerisation in der Schmelze oder in der Festphase wird ein Präpolymer erhalten, das ein zahlenmittleres Molekulargewicht von etwa 500 bis 12000 g/mol aufweist.

Die EP 0 693 515 A1 beschreibt ein Verfahren zur Herstellung von Vorkondensaten teilkristalliner oder amorpher, thermoplastisch verarbeitbarer teilaromatischer Polyamide in einem mehrstufigen Chargenprozess, der die folgenden Stufen a) bis e) umfasst:
a) eine Salzbildungsphase zur Herstellung von Salz(en) aus Diamin(en) und Dicarbonsäure(n) und gegebenenfalls partielle Vorreaktion zu niedermolekularen Oligoamiden bei Temperaturen zwischen 120 °C und 220 °C und Drücken von bis zu 23 bar,
b) gegebenenfalls die Überführung der Lösung aus Stufe a) in ein zweites Reaktionsgefäß bzw. einen Rührautoklaven unter den am Ende ihrer Herstellung herrschenden Bedingungen,
c) die Reaktionsphase, während der die Umsetzung zu den Vorkondensaten vorangetrieben wird, durch Aufheizen des Reaktorinhaltes auf eine vorgegebene Temperatur und kontrolliertes Einstellen des Wasserdampfpartialdruckes auf einen vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird,
d) eine für mindestens 10 Minuten aufrechtzuerhaltende stationäre Phase, bei der die Temperatur des Reaktorinhalts und der Wasserdampfpartialdruck jeweils auf die Werte eingestellt werden, welche für die Überführung der Vorkondensate in die nachfolgende Prozessstufe vorgesehen sind,
   wobei im Falle von Vorkondensaten teilkristalliner (Co-)Polyamide mit einem Schmelzpunkt von mehr als 280 °C die Temperatur des Reaktorinhalts während der Phasen c) und d) 265 °C nicht überschreiten darf und für die besagten teilkristallinen (Co-)Polyamide während der Phasen c) und d) bestimmte genauer definierte Randbedingungen in Bezug auf die Abhängigkeit des mindestens anzuwendenden Wasserdampfpartialdruckes PH₂O (Minimum) von der Temperatur des Reaktorinhalts und der Amidgruppenkonzentration des Polymeren einzuhalten sind, und
e) eine Austragsphase, während der die Vorkondensate entweder direkt im schmelzflüssigen Zustand oder nach Durchlaufen des festen Zustandes und gegebenenfalls weiterer Verfahrensstufen einer Endreaktionsvorrichtung zugeführt werden können.

Zum Erhalt des angestrebten hohen Molekulargewichts wird das Präpolymer im Allgemeinen einer Nachkondensation unterzogen. Zu dieser Nachkondensation enthält die EP 0 693 515 A1 keine konkreten Angaben. Lediglich bei der Würdigung des Standes der Technik ist die Möglichkeit der Nachkondensation in einem kontinuierlich arbeitenden Extruder erwähnt.

Die DE 41 42 978 beschreibt ein Mehrschicht-Verbundsystem für Mehrweg-Verpackungen aus mindestens einer Copolyamid-Schutzschicht und mindestens einer Copolyamid-Barriereschicht, wobei die Herstellung der eingesetzten Copolyamide diskontinuierlich erfolgt. Nach den Ausführungsbeispielen erfolgt die Herstellung der Copolyamide in der Schmelze in einem Druckautoklaven unter Stickstoffbegasung. Eine Nachkondensation in der Festphase ist nicht beschrieben.

Die WO 2004/055084 beschreibt teilkristalline, thermoplastisch verarbeitbare, teilaromatische Copolyamide, herstellbar durch Kondensation von mindestens den folgenden Monomeren bzw. dessen Vorkondensaten: a) Terephthalsäure b) wenigstens einer dimerisierten Fettsäure mit bis zu 44 Kohlenstoffatomen und c) wenigstens eines aliphatischen Diamins der Formel H₂N-(CH₂)ₓ-NH₂, worin x eine ganze Zahl von 4-18 bedeutet. Zur Herstellung der Copolyamide wird pauschal auf bekannte Verfahren verwiesen. In den Ausführungsbeispielen wird ein Vorkondensat einer Nachkondensation in der Schmelze in einem Autoklaven unterzogen. Der Einsatz von Inertgas während der Nachkondensation ist nicht offenbart.

Die US 2003/0176624 A1 beschreibt ein Verfahren zur Festphasentrocknung oder Festphasenpolymerisation eines Polyamids auf Basis von Xylylendiamin. Die Festphasenpolymerisation findet dabei in einem Inertgasstrom oder bei verringertem Druck statt.

Die WO 2007/048728 beschreibt Polyamide aus m-Xylylendiamin und Adipinsäure mit einem Aminoendgruppengehalt von weniger als 15 mmol/kg. Es wird zunächst ein Präpolymer hergestellt, das gegebenenfalls einer Extraktion und einer Festphasenkondensation unterzogen werden kann. Die Festphasenkondensation kann entweder im Vakuum oder unter Inertgas erfolgen.

Der vorliegenden Erfindung liegt die Aufgabe zu Grunde, ein verbessertes Verfahren zur Herstellung von aliphatischen oder teilaromatischen Polyamiden zur Verfügung zu stellen. Diese sollen sich durch vorteilhafte Produkteigenschaften, insbesondere eine nicht zu breite Molekulargewichtsverteilung und/oder einen geringen Gelanteil auszeichnen.

Überraschenderweise wurde gefunden, dass diese Aufgabe gelöst wird, wenn man ein Präpolymer eines aliphatischen oder aromatischen Polyamids einer Festphasenpolymerisation in einem abgeschlossenen Behälter bei erhöhtem Druck und in Gegenwart eines Inertgases unterzieht. Dies ist insbesondere überraschend, da während der Festphasenpolymerisation in dem abgeschlossenen Behälter kein Austrag von Komponenten, speziell von Wasser, aus dem Behälterinneren in die Umgebung erfolgen kann.

### ZUSAMMENFASSUNG DER ERFINDUNG

Ein erster Gegenstand der Erfindung ist ein Verfahren zur Herstellung eines aliphatischen oder teilaromatischen Polyamids, bei dem man
a) ein Präpolymer des aliphatischen oder teilaromatischen Polyamids bereitstellt,
b) das in Schritt a) bereitgestellte Präpolymer einer Festphasenpolymerisation in einem abgeschlossenen Behälter bei einer Temperatur in einem Bereich von 200 bis 290 °C und einem Druck in einem Bereich von 1,5 bis 20 bar in Gegenwart eines unter den Behandlungsbedingungen inerten Gases unterzieht.

Ein weiterer Gegenstand der Erfindung ist ein aliphatisches oder teilaromatisches Polyamid, das durch ein Verfahren, wie zuvor und im Folgenden definiert, erhältlich ist.

Ein weiterer Gegenstand der Erfindung ist eine Polyamid-Formmasse, enthaltend wenigstens ein Polyamid, erhältlich durch ein Verfahren, wie zuvor und im Folgenden definiert. Ein weiterer Gegenstand der Erfindung ist ein Formkörper, hergestellt aus einer solchen Polyamid-Formmasse.

Ein weiterer Gegenstand der Erfindung ist die Verwendung eines aliphatischen Polyamids, das durch ein Verfahren, wie zuvor und im Folgenden definiert, erhältlich ist, zur Herstellung von Folien, Monofilamenten, Fasern, Garnen oder textilen Flächengebilden.

Ein weiterer Gegenstand der Erfindung ist die Verwendung eines teilaromatischen Polyamids, das durch ein Verfahren, wie zuvor und im Folgenden definiert, erhältlich ist, vorzugsweise zur Herstellung von Elektro- und Elektronikbauteilen und für Automobil-Anwendungen im Hochtemperaturbereich.

### BESCHREIBUNG DER ERFINDUNG

Unter einer "Festphasenpolymerisation" wird im Allgemeinen eine Kondensationsreaktion zur Erhöhung des Molekulargewichts in einem Temperaturbereich oberhalb der Glasübergangstemperatur und unterhalb der Schmelztemperatur des Polyamids verstanden. In diesem Temperaturbereich kann ein unerwünschter thermischer Abbau des Polyamids weitgehend vermieden werden.

Unter einer "Festphasenpolymerisation in einem abgeschlossenen Behälter" wird verstanden, dass nach Erreichen der Polymerisationstemperatur kein Stoffaustausch zwischen dem Behälterinneren und der Umgebung stattfindet. Insbesondere wird während der Festphasenpolymerisation kein Gasstrom durch den Behälter geleitet. Somit erfolgt während der Festphasenpolymerisation kein Austrag von Komponenten, z. B. von Wasser, aus dem Behälterinneren in die Umgebung. Ein Austausch von Wärme zwischen dem Behälterinneren und der Umgebung ist bei der erfindungsgemäßen Festphasenpolymerisation in einem abgeschlossenen Behälter hingegen zugelassen.

Ein Präpolymer bezeichnet im Sinne der Erfindung eine Zusammensetzung, die polymere Verbindungen mit komplementären funktionellen Gruppen enthält, die zu einer Kondensationsreaktion unter Molekulargewichtserhöhung befähigt sind.

Die Monomere der Säure- und der Diaminkomponente sowie der gegebenenfalls eingesetzten Lactamkomponente bilden durch die Kondensation Wiederholungseinheiten bzw. Endgruppen in Form von Amiden aus, die von den jeweiligen Monomeren abgeleitet sind. Diese machen in der Regel 95 Mol-%, insbesondere 99 Mol-% aller im Copolyamid vorliegenden Wiederholungseinheiten und Endgruppen aus. Daneben kann das Copolyamid auch geringe Mengen anderer Wiederholungseinheiten aufweisen, die aus Abbau- oder Nebenreaktionen der Monomere, beispielsweise der Diamine, resultieren können.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, besonders bevorzugt Monomethylester, Dimethylester, Monoethylester oder Diethylester vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkylkomponenten, insbesondere Methylethylester vor.

Die Bereitstellung des Präpolymers erfolgt durch Polykondensation einer wässrigen Zusammensetzung, die wenigstens eine zur Polyamidbildung geeignete Komponente enthält.

Bevorzugt enthält das Präpolymer (und dementsprechend das aliphatische oder teilaromatische Polyamid) Komponenten eingebaut, die ausgewählt sind unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren und Derivaten davon,
D) aliphatischen oder cycloaliphatischen Diaminen,
E) Monocarbonsäuren und Derivaten davon,
F) Monoaminen,
G) mindestens dreiwertigen Aminen,
H) Lactamen,
I) ω-Aminosäuren,
K) von A) bis I) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten C) oder D) vorhanden sein muss und keine der Komponenten A) und B) vorhanden sein darf. Für aliphatische Polyamide vom Typ PA Z (wie PA 6 oder PA 12) gilt die Maßgabe, dass mindestens die Komponente H) vorhanden sein muss.

Eine bevorzugte Ausführungsform sind teilaromatische Polyamide. Für teilaromatische Polyamide gilt die Maßgabe, dass mindestens eine der Komponenten A) oder B) und mindestens eine der Komponenten C) oder D) vorhanden sein muss.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen (z. B. 1, 2, 3 oder 4) C₁-C₄-Alkylrest auf. Insbesondere weisen substituierte aromatischen Dicarbonsäuren A) 1 oder 2 C₁-C₄-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfoisophthalsäure.

Besonders bevorzugt wird als aromatische Dicarbonsäure A) Terephthalsäure, Isophthalsäure oder ein Gemisch aus Terephthalsäure und Isophthalsäure eingesetzt.

Bevorzugt weisen die erfindungsgemäß bereitgestellten teilaromatischen PolyamidPräpolymere einen Anteil von aromatischen Dicarbonsäuren an allen Dicarbonsäuren von wenigstens 50 Mol%, besonders bevorzugt von 70 Mol% bis 100 Mol%, auf. In einer speziellen Ausführungsform weisen die nach dem erfindungsgemäßen Verfahren hergestellten teilaromatischen Polyamide (und die in Schritt a) bereitgestellten Präpolymere), einen Anteil an Terephthalsäure oder Isophthalsäure oder einem Gemisch aus Terephthalsäure und Isophthalsäure, bezogen auf alle Dicarbonsäuren von wenigstens 50 Mol%, bevorzugt von 70 Mol% bis 100 Mol%, auf.

Die aromatischen Diamine B) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine D) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin D) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin D) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin D) ausschließlich Hexamethylendiamin einpolymerisiert.

In einer weiteren speziellen Ausführung enthalten die teilaromatischen Polyamide als Diamin D) ausschließlich Bis-(4-aminocyclohexyl)-methan einpolymerisiert.

In einer weiteren speziellen Ausführung enthalten die teilaromatischen Polyamide als Diamin D) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin D) ausschließlich Isophorondiamin (IPDA) einpolymerisiert.

Die Präpolymere (und entsprechend die aliphatischen und die teilaromatischen Polyamide) können wenigstens eine Monocarbonsäure E) einpolymerisiert enthalten. Die Monocarbonsäuren E) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic®-Säuren, Koch®-Säuren und Mischungen davon.

Werden als Monocarbonsäuren E) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure E) ausgewählt unter Essigsäure, Propionsäure, Benzoesäure und Mischungen davon.

In einer speziellen Ausführung enthalten die Präpolymere (und entsprechend die aliphatischen und die teilaromatischen Polyamide) als Monocarbonsäure E) ausschließlich Propionsäure einpolymerisiert.

In einer weiteren speziellen Ausführung enthalten die Präpolymere (und entsprechend aliphatischen und die teilaromatischen Polyamide) als Monocarbonsäure E) ausschließlich Benzoesäure einpolymerisiert.

In einer weiteren speziellen Ausführung enthalten die Präpolymere (und entsprechend die aliphatischen und die teilaromatischen Polyamide) als Monocarbonsäure E) ausschließlich Essigsäure einpolymerisiert.

Die Präpolymere (und entsprechend die aliphatischen und die teilaromatischen Polyamide) können wenigstens ein Monoamin F) einpolymerisiert enthalten. Dabei enthalten die aliphatischen Polyamide nur aliphatische Monoamine oder alicyclische Monoamine einpolymerisiert. Die Monoamine F) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der Präpolymere (und entsprechend der aliphatischen und der teilaromatischen Polyamide) kann zusätzlich wenigstens ein mindestens dreiwertiges Amin G) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)-methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine G) eingesetzt.

Geeignete Lactame H) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren I) sind 6-Aminocapronsäure, 7-Aminoheptansäure, 11-Aminoundecansäure, 12-Aminododecansäure und Mischungen davon.

Geeignete von A) bis I) verschiedene, damit cokondensierbare Verbindungen K) sind wenigstens dreiwertige Carbonsäuren, Diaminocarbonsäuren, etc.

Geeignete Verbindungen K) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

In einer bevorzugten Ausführungsform dient das erfindungsgemäße Verfahren zur Herstellung eines aliphatischen Polyamids.

Das Polyamid ist dann vorzugsweise ausgewählt ist unter PA 6, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere handelt es sich bei dem aliphatischen Polyamid um PA 6, PA 66 oder PA 666, ganz besonders bevorzugt um PA 6.

In einer weiteren bevorzugten Ausführungsform dient das erfindungsgemäße Verfahren zur Herstellung eines teilaromatischen Polyamids.

Bevorzugt ist das Polyamid dann ausgewählt unter PA 6.T, PA 9.T, PA8.T, PA 10.T, PA 12.T, PA6.I, PA8.I, PA9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.1/12, PA 6.T/6.1/6.10, PA 6.T/6.1/6.12, PA 6.T/6.6, PA6.T/6.10, PA6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.1/10.T/10.1, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Besonders bevorzugt ist das Polyamid dann ausgewählt unter PA 6.T, PA 9.T, PA 10.T, PA 12.T, PA6.I, PA9.I, PA 10.I, PA 12.I, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T
und Copolymeren und Gemischen davon.

In einer speziellen Ausführung handelt es sich bei dem teilaromatischen Polyamid um PA 6.T/6.I.

In einer weiteren speziellen Ausführung handelt es sich bei dem teilaromatischen Polyamid um PA 6.T/6.I/IPDA.T/IPDA.I.

In einer weiteren speziellen Ausführung handelt es sich bei dem teilaromatischen Polyamid um PA 6.T/6.I/MXDA.T/MXDA.I.

Zur Herstellung der erfindungsgemäß bereitgestellten Präpolymere wird im Allgemeinen eine wässrige Zusammensetzung eingesetzt, die wenigstens eine zur Polyamidbildung geeignete Komponente enthält. Die Herstellung der Präpolymere kann grundsätzlich nach üblichen, dem Fachmann bekannten Verfahren erfolgen.

Ein geeignetes Verfahren zur Herstellung von teilaromatischen Polyamid-Oligomeren ist z. B. in der EP 0 693 515 A1 beschrieben.

Die zur Herstellung der Präpolymere eingesetzte wässrige Zusammensetzung weist vorzugsweise einen Wassergehalt von 20 bis 55 Gew.-%, besonders bevorzugt von 25 bis 50 Gew.-%, bezogen auf das Gesamtgewicht der Zusammensetzung, auf. In einer speziellen Ausführungsform wird eine wässrige Lösung bereitgestellt, die ein Salz aus wenigstens einem Diamin und wenigstens einer Carbonsäure enthält. Diese Lösung weist vorzugsweise einen Wassergehalt von 20 bis 55 Gew.-%, besonders bevorzugt von 25 bis 50 Gew.-%, bezogen auf das Gesamtgewicht der Lösung, auf.

Zusätzlich zu wenigstens einer zur Polyamidbildung geeigneten Komponente und Wasser kann die zur Herstellung der Präpolymere eingesetzte wässrige Zusammensetzung weitere Komponenten enthalten. Diese sind vorzugsweise ausgewählt unter Katalysatoren, Kettenreglern, anwendungsbedingten Additiven und Mischungen davon. Geeignete Additive sind Flammschutzmittel, anorganische und organische Stabilisatoren, Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, Füll- und/oder Verstärkungsmittel, etc.

Zur Herstellung der Präpolymere kann wenigstens ein Katalysator eingesetzt werden. Geeignete Katalysatoren sind vorzugsweise ausgewählt unter anorganischen und/oder organischen Phosphor-, Zinn- oder Bleiverbindungen und deren Mischungen.

Als Katalysatoren geeignete Zinnverbindungen sind z. B. Zinn(II)-oxid, Zinn(II)-hydroxid, Zinn(II)-Salze ein- oder mehrwertiger Carbonsäuren, z. B. Zinn(II)-dibenzoat, Zinn(II)-di(2-ethylhexanoat), Zinn(II)-oxalat, Dibutylzinnoxid, Butylzinnsäure(C₄H₉-SnOOH), Dibutyl-Zinn-dilaurat, etc. Geeignete Bleiverbindungen sind z. B. Blei(II)-oxid, Blei(II)-hydroxid, Blei(II)-acetat, basisches Blei(II)-acetat, Blei(II)-carbonat, etc.

Bevorzugte Katalysatoren sind Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z. B. Na, K, Mg, Ca, Zn oder Al und/oder deren Ester wie z. B. Triphenylphosphat, Triphenylphosphit oder Tris-(nonylphenyl)-phosphit. Besonders bevorzugt als Katalysator sind die hypophosphorige Säure und deren Salze wie Natriumhypophosphit.

Bevorzugt werden die Katalysatoren in einer Menge von 0,005 bis 2,5 Gew.-%, bezogen auf das Gesamtgewicht der wässrigen Zusammensetzung, eingesetzt.

Besonders bevorzugt werden hypophosphorige Säure und/oder ein Salz der hypophosphorigen Säure in einer Menge von 50 bis 1000 ppm, besonders bevorzugt von 100 bis 500 ppm, bezogen die Gesamtmenge der zur Polyamidbildung geeigneten Komponenten (= Komponenten A) bis K)), eingesetzt.

Die ringöffnende Lactampolymerisation kann rein hydrolytisch ohne Einsatz eines Katalysators erfolgen. Bei der aktivierten anionischen Lactampolymerisation werden Katalysatoren eingesetzt, welche die Bildung von Lactamanionen ermöglichen. Geeignete Katalysatoren und Aktivatoren sind dem Fachmann bekannt. Die Polykondensation von Aminonitrilen, z. B. die Herstellung von Polyamid 6 aus 6-Aminocapronitril (ACN), kann in Gegenwart eines Heterogenkatalysators, wie TiO₂, durchgeführt werden.

Zur Regelung der Molmasse kann wenigstens ein Kettenregler eingesetzt werden. Geeignete Kettenregler sind die zuvor bei den zur Polyamidbildung geeigneten Komponenten genannten Monocarbonsäuren A) und Monoamine F). Bevorzugt ist der Kettenregler ausgewählt unter Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-di-tert-butyl-4-hydroxybenzylthio)essigsäure, 3,3-bis(3-tert-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, 2,2,6,6-tetramethylpiperidin-4-amin, 1,2,2,6,6-Pentamethylpiperidin-4-amin, 4-Amino-2,6-di-tert-butylphenol und Mischungen davon. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Kettenregler liegt in einem Bereich von 5 bis 500 mmol pro kg Polyamid-Oligomer, vorzugsweise 10 bis 200 mmol pro kg Präpolymer.

Gewünschtenfalls können der wässrigen Zusammensetzung weitere von Katalysatoren und Kettenreglern verschiedene Additive zugesetzt werden. Zu den Additiven zählen z. B. Antioxidantien, Lichtschutzmittel, übliche Verarbeitungshilfsmittel, Nukleierungsmittel und Kristallisationsbeschleuniger.

Die bereitgestellten Präpolymere weisen vorzugsweise ein zahlenmittleres Molekulargewicht Mₙ von etwa 500 bis etwa 12000 g/mol auf, bevorzugt von etwa 1000 bis 4000 g/mol.

Das in Schritt a) bereitgestellte Präpolymer kann in einer Teilchengröße bereitgestellt werden, die von pulverförmigen Partikeln bis Granulatgröße reicht. Bevorzugt weist das in Schritt a) bereitgestellte Präpolymer eine Teilchengröße in einem Bereich von etwa 1 µm bis 10 mm auf. Eine bevorzugte Ausführungsform ist ein Pulver mit einer Teilchengröße in einem Bereich von etwa 100 µm bis 1 mm.

Bevorzugt wird das Präpolymer vor seinem Einsatz in Schritt b) einer Formgebung unterzogen. Vorzugsweise umfasst die Formgebung des Präpolymers eine Granulierung und/oder eine Mahlung. Geeignete Verfahren zur Granulierung und Mahlung von Polyamiden sind dem Fachmann bekannt. Geeignete Verfahren sind z. B. in Kunststoffhandbuch, ¾ Technische Thermoplaste: Polyamide, Carl Hanser Verlag, 1998, München, S. 68-69, beschrieben. Ein spezielles Verfahren der Formgebung ist die Unterwassergranulation, die dem Fachmann ebenfalls prinzipiell bekannt ist. In einer geeigneten Ausführung wird das Polyamid zur Formgebung zuerst zu einem oder mehreren Strängen geformt. Dazu können dem Fachmann bekannte Vorrichtungen verwendet werden. Geeignete Vorrichtungen sind z. B. Lochplatten, Düsen oder Düsenplatten. Der Strangdurchmesser liegt vorzugsweise in einem Bereich von 0,5 mm bis 20 mm, besonders bevorzugt 1 mm bis 5 mm, ganz besonders bevorzugt 1,5 bis 3 mm. In einer geeigneten Ausführungsform wird das zu Strängen geformte Polyamid in fließfähiger Form einer Zerkleinerung zu Polyamidteilchen unterzogen. In einer alternativen Ausführungsform wird das zu Strängen geformte Polyamid verfestigt und anschließend einer Zerkleinerung zu Polyamidteilchen unterzogen. Geeignete Mühlen zur Mahlung der Präpolymere sind z. B. Hammermühlen, Walzenstühle, Kugelmühlen, etc.

In Schritt b) des erfindungsgemäßen Verfahrens wird das in Schritt a) bereitgestellte Präpolymer einer Festphasenpolymerisation in einem abgeschlossenen Behälter bei erhöhter Temperatur und erhöhtem Druck in Gegenwart eines unter den Behandlungsbedingungen inerten Gases unterzogen.

Für die Festphasenpolymerisation geeignete abgeschlossene Behälter sind die dem Fachmann bekannten gasdicht verschließbaren Druckbehälter (Autoklaven), wie sie üblicherweise für die thermische Behandlung von Stoffen im Überdruckbereich eingesetzt werden.

Bei der Festphasenpolymerisation in Schritt b) liegt die Temperatur in dem abgeschlossenen Behälter bevorzugt in einem Bereich von 250 bis 280 °C.

Bei der Festphasenpolymerisation in Schritt b) liegt der Druck in dem abgeschlossenen Behälter bevorzugt in einem Bereich von 2 bis 15 bar, insbesondere von 3 bis 10 bar. Ein speziell geeigneter Druckbereich ist von 4 bis 7 bar.

Die Verweilzeit in Schritt b) in dem abgeschlossenen Behälter beträgt bevorzugt 0,5 Stunden bis 72 Stunden, besonders bevorzugt 1 Stunde bis 48 Stunden, speziell 2 bis 24 Stunden.

Als Inertgas eignen sich beispielsweise Stickstoff, CO₂, Helium, Neon und Argon sowie Mischungen davon. Bevorzugt wird Stickstoff eingesetzt.

Das erfindungsgemäße Verfahren führt zu teilaromatischen Polyamiden mit besonders vorteilhaften Eigenschaften.

Die Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde PMMA als Polymerstandard mit niedriger Polydispersität eingesetzt.

Die erfindungsgemäßen und nach dem erfindungsgemäßen Verfahren erhaltenen aliphatischen Polyamide weisen vorzugsweise ein zahlenmittleres Molekulargewicht Mₙ in einem Bereich von 13000 bis 28000 g/mol auf.

Die erfindungsgemäßen und nach dem erfindungsgemäßen Verfahren erhaltenen teilaromatischen Polyamide weisen vorzugsweise ein zahlenmittleres Molekulargewicht Mₙ in einem Bereich von 13000 bis 25000 g/mol, besonders bevorzugt von 15000 bis 20000 g/mol, auf.

Die erfindungsgemäßen und nach dem erfindungsgemäßen Verfahren erhaltenen aliphatischen Polyamide weisen vorzugsweise ein gewichtsmittleres Molekulargewicht M_{w} in einem Bereich von 20000 bis 140000 g/mol auf.

Die erfindungsgemäßen und nach dem erfindungsgemäßen Verfahren erhaltenen teilaromatischen Polyamide weisen vorzugsweise ein gewichtsmittleres Molekulargewicht M_{w} in einem Bereich von 25000 bis 125000 g/mol auf.

Die erfindungsgemäßen und nach dem erfindungsgemäßen Verfahren erhaltenen aliphatischen und teilaromatischen Polyamide weisen vorzugsweise eine Polydispersität PD (= M_{w}/Mₙ) von höchstens 6, besonders bevorzugt von höchstens 5, insbesondere von höchstens 3,5, auf.

Die nach dem erfindungsgemäßen Verfahren erhältlichen aliphatischen Polyamide eignen sich insbesondere zur Herstellung von Folien, Monofilamenten, Fasern, Garnen oder textilen Flächengebilden. Dabei erweisen sich die erfindungsgemäß hergestellten aliphatischen Polyamide in der Regel als besonders verarbeitungsstabil während einer Schmelzextrusion durch Breitschlitz- oder ringförmige Düsen zu Flach- oder Blasfolien sowie durch ringförmige Düsen kleineren Durchmessers zu Monofilamenten.

Die nach dem erfindungsgemäßen Verfahren erhältlichen teilaromatischen Polyamide verfügen ebenfalls über vorteilhafte Eigenschaften.

Das erfindungsgemäße und nach dem erfindungsgemäßen Verfahren erhaltene teilaromatische Polyamid weist vorzugsweise einen Gelgehalt von höchstens 5 Gew.-%, bezogen auf das Gesamtgewicht des Polyamids, auf.

Das erfindungsgemäße und nach dem erfindungsgemäßen Verfahren erhaltene teilaromatische Polyamid weist vorzugsweise eine Viskositätszahl von 80 bis 120 ml/g auf. Die Viskositätszahl (Staudinger-Funktion, bezeichnet mit VZ, VN oder J) ist definiert als VZ = 1 / c x (η - ηₛ) / ηₛ. Die Viskositätszahl steht in direkter Beziehung zur mittleren molaren Masse des Polyamids und gibt Auskunft über die Verarbeitbarkeit eines Kunststoffes. Die Bestimmung der Viskositätszahl kann nach EN ISO 307 mit einem Ubbelohde-Viskosimeter erfolgen.

### Polyamid-Formmasse

Es wird außerdem eine Polyamid-Formmasse offenbart, die wenigstens ein erfindungsgemäßes teilaromatisches Copolyamid enthält.

Bevorzugt ist eine Polyamid-Formmasse, enthaltend:
A) 25 bis 100 Gew.-% wenigstens eines teilaromatischen Copolyamids, wie zuvor definiert,
B) 0 bis 75 Gew.-% wenigstens eines Füll- und Verstärkungsstoffs,
C) 0 bis 50 Gew.-% wenigstens eines Additivs,
wobei die Komponenten A) bis C) zusammen 100 Gew.-% ergeben.

Der Begriff "Füllstoff und Verstärkungsstoff" (= Komponente B) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), carbon black, nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern.

Speziell werden Schnittglasfasern eingesetzt. Insbesondere umfasst die Komponente B) Glas- und/oder Kohlenstofffasern, wobei bevorzugt Kurzfasern eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der beschriebenen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 µm, bevorzugt von 12 bis 18 µm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Die beschriebenen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z. B. Spritzgießen oder Pressen, zu Formteilen weiterverarbeitet werden.

Die beschriebenen Polyamid-Formmasse enthält bevorzugt 25 bis 75 Gew.-%, besonders bevorzugt 33 bis 60 Gew.-%, mindestens eines Füll- und Verstärkungsstoffs B), bezogen auf das Gesamtgewicht der Polyamid-Formmasse.

Geeignete Additive C) sind Wärmestabilisatoren, Flammschutzmittel, Lichtschutzmittel (UV-Stabilisatoren, UV-Absorber oder UV-Blocker), Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente C) enthalten die beschriebenen Formmassen vorzugsweise 0,01 bis 3 Gew.-%, besonders bevorzugt 0,02 bis 2 Gew.-%, insbesondere 0,1 bis 1,5 Gew.-% mindestens eines Wärmestabilisators.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten A) bis C).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf die Summe der Komponenten A) bis C).

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Geeignete Verbindungen C) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, Cu-SO₄, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolensäure, 4,4'-Bis(α,α-dimethylbenzyl)diphenylamin (Naugard ® 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ® PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec NC66 von BASF SE. Insbesondere bevorzugt wird eine Wärmestabilisierung ausschließlich auf Basis von Cul und Kl. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt.

Die beschriebenen Formmassen enthalten vorzugsweise 0 bis 30 Gew.-%, besonders bevorzugt 0 bis 20 Gew.-%, bezogen auf das Gesamtgewicht der Komponenten A) bis C), mindestens eines Flammschutzmittels als Additiv C). Wenn die erfindungsgemäßen Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewichten der Komponenten A) bis C). Als Flammschutzmittel C) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze und/oder stickstoffhaltige Flammschutzmittel wie Melamin, Melamincyanurat, Melaminsulfat, Melaminborat, Melaminoxalat, Melaminphosphat (prim, sec.) oder sec. Melaminpyrophosphat, Neopentylglycolborsäuremelamin, Guanidin und dem Fachmann bekannte Derivate davon sowie polymeres Melaminphosphat (CAS Nr.: 56386-64-2 bzw. 218768-84-4 sowie EP 1095030), Ammoniumpolyphosphat, Trishydroxyethylisocyanurat (gegebenenfalls auch Ammoniumpolyphosphat in Mischung mit Trishydroxyethylisocyanurat) (EP 584567). Weitere N-haltige oder P-haltige Flammschutzmittel oder als Flammschutzmittel geeignete PN-Kondensate können der DE 10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bisphenol-A mit Epoxiden, bromierte oligomere oder polymere Styrole, Dechloran, welche meist mit Antimonoxiden als Synergisten eingesetzt werden (Für Einzelheiten und weitere Flammschutzmittel: siehe DE-A-10 2004 050 025).

Als Antistatika können in den beschriebenen Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

### Formkörper

Des Weiteren betrifft die vorliegende Erfindung Formkörper, die unter Verwendung von den erfindungsgemäßen Copolyamiden bzw. Polyamid-Formmassen hergestellt werden.

Die erfindungsgemäßen teilaromatischen Polyamide eignen sich vorteilhaft für eine Verwendung zur Herstellung von Formteilen für Elektro- und Elektronikbauteilen und für Automobil-Anwendungen im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Eine weitere spezielle Ausführungsform sind Formkörper als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäßen teilaromatischen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile möglich.

Für den Küchen- und Haushaltsbereich ist der Einsatz fließverbesserter Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe, möglich.

Die folgenden Beispiele dienen der Verdeutlichung der Erfindung, ohne sie in irgendeiner Weise zu beschränken.

### BEISPIELE

Analytische Methoden:
Molekulargewichtsbestimmung mittels GPC:
   Standard: PMMA
   Elutionsmittel: Hexafluoroisopropanol + 0,05 % Trifluoressigsäure-Kaliumsalz
   Fluss: 1 mL/min
   Säulendruck: Vorsäule 7,5 MPa, Trennsäulen 75 MPa
   Säulensatz: 1 Vorsäule (I = 5 cm), 2 Trennsäulen (I = je 30 cm)
   Detektor: DRI (Refractive Index Detector) Agilent 1100

Der Gelgehalt des Polymers wurde indirekt durch GPC bestimmt. Hierzu wurden Proben des Polyamids in Hexafluoroisopropanol + 0,05 % Trifluoressigsäure-Kaliumsalz gelöst und über einen Filter (Millipore Millex FG) mit einer Porengröße von 0,2 µm filtriert. Anschließend wurde die Konzentration des Polymers, welches aus der GPC eluiert wird, bestimmt. Der Gel-Anteil ergibt sich aus der Differenz der theoretischen Polymerkonzentration, welche durch die Menge des eingesetzten Polymers vor der Filtration gegeben ist, mit der gemessenen Konzentration (bezogen auf eingesetztes Polymer vor der Filtration).

Die Herstellung der Präpolymere erfolgte, wie dies in der EP 0 693 515 A1, Beispiele 9.1 - 9.3, beschrieben ist.

**Tabelle 1: verwendete teilaromatische Polyamidpräpolymere**

| Präpolymer Nr. | Zusammensetzung | Mn [g/mol] | Mw [g/mol] | PD | Gel [%] | Erscheinungsbild |
|---|---|---|---|---|---|---|
| 1 | PA 6.T/6.I/MXDA.T/MXDA.I | 1300 | 2600 | 2,0 | <5 | weißes Pulver |
| 2 | PA 6.T/6.I/MXDA.T/MXDA.I | 1500 | 3000 | 2,0 | <5 | weißes Pulver |
| 3 | PA 6.T/6.I | 3800 | 8000 | 2,1 | <5 | weißes Pulver |
| 4 | PA 6.T/6.I | 1800 | 3500 | 1,9 | <5 | weißes Pulver |

**Tabelle 2: Erfindungsgemäße Beispiele**

| Beispiel Nr. | Präpolymer Nr. | Mn [g/mol] | Mw [g/mol] | PD | Gel [%] | Erscheinungsbild | T [°C] | t [min] | Atmosphäre |
|---|---|---|---|---|---|---|---|---|---|
| 1 | 1 | 21000 | 68500 | 3,3 | <5 | weißes Pulver | 280 | 360 | N₂, 5 bar |
| 2 | 1 | 21000 | 61400 | 2,9 | <5 | weißes Pulver | 280 | 360 | N₂, 5 bar |
| 3 | 1 | 20400 | 59500 | 2,9 | <5 | weißes Pulver | 280 | 360 | N₂, 5 bar |
| 4 | 1 | 217000 | 82200 | 3,8 | <5 | weißes Pulver | 280 | 360 | N₂, 5 bar |

| | | | | | | | | | |
|---|---|---|---|---|---|---|---|---|---|
| Methode: Festphasenkondensation, ungerührter Autoklav, 10 g Polymer im Reagenzglas | | | | | | | | | |

**Tabelle 3: Erfindungsgemäße Beispiele**

| Beispiel Nr. | Präpolymer Nr. | Mn [g/mol] | Mw [g/mol] | PD | Gel [%] | Erscheinungsbild | T [°C] | t [min] | Atmosphäre |
|---|---|---|---|---|---|---|---|---|---|
| 5 | 3 | 17500 | 42800 | 2,4 | <5 | weißes Pulver | 280 | 360 | N₂, 1 bar |
| 6 | 3 | 17000 | 37700 | 2,2 | <5 | weißes Pulver | 280 | 360 | N₂, 5 bar |
| 7 | 3 | 16500 | 35500 | 2,2 | <5 | weißes Pulver | 280 | 360 | N₂, 5 bar |
| 8 | 3 | 188000 | 48800 | 2,6 | <5 | weißes Pulver | 280 | 360 | N₂, 5 bar |

| | | | | | | | | | |
|---|---|---|---|---|---|---|---|---|---|
| Methode: Festphasenkondensation, ungerührter Autoklav, 10 g Polymer im Reagenzglas | | | | | | | | | |

**Tabelle 4: Erfindungsgemäße Beispiele**

| Beispiel Nr. | Präpolymer Nr. | Mn [g/mol] | Mw [g/mol] | PD | Gel [%] | Erscheinungsbild | T [°C] | t [min] | Atmosphäre |
|---|---|---|---|---|---|---|---|---|---|
| 9 | 4 | 15500 | 43700 | 2,8 | <5 | weißes Pulver | 280 | 360 | N₂, 5 bar |
| 10 | 4 | 15700 | 49000 | 3,1 | <5 | weißes Pulver | 280 | 360 | N₂, 5 bar |
| 11 | 4 | 15400 | 47100 | 3,1 | <5 | weißes Pulver | 280 | 360 | N₂, 5 bar |
| 12 | 4 | 15600 | 49300 | 3,2 | <5 | weißes Pulver | 280 | 360 | N₂, 5 bar |

| | | | | | | | | | |
|---|---|---|---|---|---|---|---|---|---|
| Methode: Festphasenkondensation, ungerührter Autoklav, 10 g Polymer im Reagenzglas M/53224-EP | | | | | | | | | |

**Tabelle 5: Vergleichsbeispiele**

| Beispiel Nr. | Präpolymer Nr. | Mn [g/mol] | Mw [g/mol] | PD | Gel [%] | Erscheinungsbild | T [°C] | t [min] | Atmosphäre |
|---|---|---|---|---|---|---|---|---|---|
| V1 | 1 | 5540 | 31500 | 5,7 | 70 | leicht gelbes Pulver | 280 | 360 | N₂-Strom |
| V2 | 3 | 5830 | 31900 | 5,5 | 85 | weißes Pulver | 280 | 360 | N₂-Strom |
| V3 | 4 | 18900 | 124000 | 6,6 | 45 | weißes Pulver | 280 | 360 | N₂-Strom |

| | | | | | | | | | |
|---|---|---|---|---|---|---|---|---|---|
| Methode: Festphasenkondensation, ungerührter Autoklav, 10 g Polymer im Reagenzglas. Die Temperung wurde unter gleichen Bedingungen durchgeführt wie in den erfindungsgemäßen Beispielen, nur mit einem konstanten Stickstoffdurchfluss (20 L/h) anstatt einem Druck von 5. Man sieht dass die PD deutlich höher ist als bei den erfindungsgemäßen Beispielen und das Material einen hohen Gelanteil hat. | | | | | | | | | |

## Patentansprüche

1. Verfahren zur Herstellung eines aliphatischen oder teilaromatischen Polyamids, bei dem man
a) ein Präpolymer des aliphatischen oder teilaromatischen Polyamids bereitstellt,
b) das in Schritt a) bereitgestellte Präpolymer einer Festphasenpolymerisation in einem abgeschlossenen Behälter bei einer Temperatur in einem Bereich von 200 bis 290°C und einem Druck in einem Bereich von 1,5 bis 20 bar in Gegenwart eines unter den Behandlungsbedingungen inerten Gases unterzieht.

2. Verfahren nach Anspruch 1, wobei das in Schritt a) bereitgestellte Präpolymer Komponenten einpolymerisiert enthält, die ausgewählt sind unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren und Derivaten davon,
D) aliphatischen oder cycloaliphatischen Diaminen,
E) Monocarbonsäuren und Derivaten davon,
F) Monoaminen,
G) mindestens dreiwertigen Aminen,
H) Lactamen,
I) ω-Aminosäuren,
K) von A) bis I) verschiedenen, damit cokondensierbaren Verbindungen.

3. Verfahren nach Anspruch 2, wobei in Schritt a) zur Bereitstellung des Präpolymers mindestens eine der Komponenten A) oder B) vorhanden sein muss.

4. Verfahren nach einem der vorhergehenden Ansprüche, wobei das Polyamid ausgewählt ist unter PA 6.T, PA 9.T, PA8.T, PA 10.T, PA 12.T,
PA6.I, PA 8.I, PA9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.1/6.10, PA 6.T/6.I/6.12, PA 6.T/6.6, PA 6.T/6.10, PA 6.T/6.12, PA 10.T/6, PA 10.T/11, PA 10.T/12,PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.1/10.T/10.1, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

5. Verfahren nach einem der vorhergehenden Ansprüche, wobei es sich bei dem in Schritt a) bereitgestellten Präpolymer um PA 6.T/6.I oder um PA 6.T/6.I/IPDA.T/IPDA.I oder um PA 6.T/6.I/MXDA.T/MXDA.I handelt.

6. Verfahren nach einem der vorhergehenden Ansprüche, wobei das in Schritt a) bereitgestellte Präpolymer ein zahlenmittleres Molekulargewicht von etwa 500 bis etwa 12000 g/mol, bevorzugt von etwa 1000 bis 4000 g/mol, aufweist.

7. Verfahren nach einem der vorhergehenden Ansprüche, wobei bei der Festphasenpolymerisation in Schritt b) die Temperatur in dem abgeschlossenen Behälter in einem Bereich von 250 bis 280 °C liegt.

8. Verfahren nach einem der vorhergehenden Ansprüche, wobei bei der Festphasenpolymerisation in Schritt b) der Druck in dem abgeschlossenen Behälter in einem Bereich von 2 bis 15 bar, insbesondere von 3 bis 10 bar, liegt.

9. Verfahren nach einem der vorhergehenden Ansprüche, wobei bei der Festphasenpolymerisation in Schritt b) als Inertgas Stickstoff eingesetzt wird.

10. Verwendung eines aliphatischen Polyamids, , erhältlich durch ein Verfahren, wie in einem der Ansprüche 1 bis 9 definiert, zur Herstellung von Folien, Monofilamenten, Fasern, Garnen oder textilen Flächengebilden.

11. Verwendung eines teilaromatischen Polyamids, ,erhältlich durch ein Verfahren, wie in einem der Ansprüche 1 bis 9 definiert, zur Herstellung von Elektro- und Elektronikbauteilen und für Automobil-Anwendungen im Hochtemperaturbereich.

12. Verwendung nach Anspruch 11 für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

## Claims

1. A process for preparing an aliphatic or semiaromatic polyamide, in which
a) a prepolymer of the aliphatic or semiaromatic polyamide is provided,
b) the prepolymer provided in step a) is subjected to a solid state polymerization in a closed vessel at a temperature within a range from 200 to 290°C and a pressure within a range from 1.5 to 20 bar in the presence of a gas which is inert under the treatment conditions.

2. The process according to claim 1, wherein the prepolymer provided in step a) comprises polymerized components selected from
A) unsubstituted or substituted aromatic dicarboxylic acids and derivatives of unsubstituted or substituted aromatic dicarboxylic acids,
B) unsubstituted or substituted aromatic diamines,
C) aliphatic or cycloaliphatic dicarboxylic acids and derivatives thereof,
D) aliphatic or cycloaliphatic diamines,
E) monocarboxylic acids and derivatives thereof,
F) monoamines,
G) at least trifunctional amines,
H) lactams,
I) ω-amino acids,
K) compounds which are different than A) to I) and are cocondensable therewith.

3. The process according to claim 2, wherein at least one of components A) and B) has to be present for provision of the prepolymer in step a).

4. The process according to any of the preceding claims, wherein the polyamide is selected from PA 6.T, PA 9.T, PA8.T, PA 10.T, PA 12.T, PA 6.1, PA 8.1, PA 9.1, PA 10.I, PA 12.1, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T and copolymers and mixtures thereof.

5. The process according to any of the preceding claims, wherein the prepolymer provided in step a) is PA 6.T/6.I or PA 6.T/6.I/IPDA.T/IPDA.I or PA 6.T/6.I/MXDA.T/MXDA.I.

6. The process according to any of the preceding claims, wherein the prepolymer provided in step a) has a number-average molecular weight of 500 to about 12000 g/mol, preferably of about 1000 to 4000 g/mol.

7. The process according to any of the preceding claims, wherein the temperature in the closed vessel in the solid state polymerization in step b) is within a range from 250 to 280°C.

8. The process according to any of the preceding claims, wherein the pressure in the closed vessel in the solid state polymerization in step b) is within a range from 2 to 15 bar, especially from 3 to 10 bar.

9. The process according to any of the preceding claims, wherein the inert gas used in the solid state polymerization in step b) is nitrogen.

10. The use of an aliphatic polyamide obtainable by a process as defined in any of claims 1 to 9 for production of films, monofilaments, fibers, yarns or textile fabrics.

11. The use of a semiaromatic polyamide obtainable by a process as defined in any of claims 1 to 9 for production of electrical and electronic components and for high-temperature automotive applications.

12. The use according to claim 11 in soldering operations under lead-free conditions (lead free soldering), for production of plug connectors, microswitches, microbuttons and semiconductor components, especially reflector housings of light-emitting diodes (LEDs).

## Revendications

1. Procédé de fabrication d'un polyamide aliphatique ou partiellement aromatique, selon lequel
a) un prépolymère du polyamide aliphatique ou partiellement aromatique est préparé,
b) le prépolymère préparé à l'étape a) est soumis à une polymérisation en phase solide dans un contenant fermé à une température dans la plage allant de 200 à 290 °C et à une pression dans une plage allant de 1,5 à 20 bar en présence d'un gaz inerte dans les conditions de traitement.

2. Procédé selon la revendication 1, dans lequel le prépolymère préparé à l'étape a) contient sous forme copolymérisée des composants qui sont choisis parmi :
A) les acides dicarboxyliques aromatiques non substitués ou substitués et les dérivés d'acides dicarboxyliques aromatiques non substitués ou substitués,
B) les diamines aromatiques non substituées ou substituées,
C) les acides dicarboxyliques aliphatiques ou cycloaliphatiques et leurs dérivés,
D) les diamines aliphatiques ou cycloaliphatiques,
E) les acides monocarboxyliques et leurs dérivés,
F) les monoamines,
G) les amines au moins trivalentes,
H) les lactames,
I) les acides aminés ω,
K) les composés différents de A) à I), co-condensables avec ceux-ci.

3. Procédé selon la revendication 2, dans lequel au moins un des composants A) ou B) doit être présent à l'étape a) pour la préparation du prépolymère.

4. Procédé selon l'une quelconque des revendications précédentes, dans lequel le polyamide est choisi parmi PA 6.T, PA 9.T, PA 8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA 6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T et leurs copolymères et mélanges.

5. Procédé selon l'une quelconque des revendications précédentes, dans lequel le prépolymère préparé à l'étape a) est le PA 6.T/6.I ou le PA 6.T/6.I/IPDA.T/IPDA.I ou le PA 6.T/6.I/MXDA.T/MXDA.I.

6. Procédé selon l'une quelconque des revendications précédentes, dans lequel le prépolymère préparé à l'étape a) présente un poids moléculaire moyen en nombre d'environ 500 à environ 12 000 g/mol, de préférence d'environ 1 000 à 4 000 g/mol.

7. Procédé selon l'une quelconque des revendications précédentes, dans lequel, lors de la polymérisation en phase solide à l'étape b), la température dans le contenant fermé se situe dans une plage allant de 250 à 280 °C.

8. Procédé selon l'une quelconque des revendications précédentes, dans lequel, lors de la polymérisation en phase solide à l'étape b), la pression dans le contenant fermé se situe dans une plage allant de 2 à 15 bar, notamment de 3 à 10 bar.

9. Procédé selon l'une quelconque des revendications précédentes, dans lequel, lors de la polymérisation en phase solide à l'étape b), de l'azote est utilisé en tant que gaz inerte.

10. Utilisation d'un polyamide aliphatique, pouvant être obtenu par un procédé tel que défini dans l'une quelconque des revendications 1 à 9, pour la fabrication de films, de monofilaments, de fibres, de fils ou de structures textiles plates.

11. Utilisation d'un polyamide partiellement aromatique, pouvant être obtenu par un procédé tel que défini dans l'une quelconque des revendications 1 à 9, pour la fabrication de composants électriques et électroniques et pour des applications automobiles dans une zone à température élevée.

12. Utilisation selon la revendication 11 pour l'utilisation dans des procédés de brasage dans des conditions sans plomb (lead free soldering), pour la fabrication de connecteurs, de microcontacteurs, de micropalpeurs et de composants semi-conducteurs, notamment de boîtiers de réflecteurs de diodes électroluminescentes (DEL).
